Europäisches Patentamt

European Patent Office

Office européen des brevets

(19)

(11) Veröffentlichungsnummer: **0 198 302**
**B1**

(12) **EUROPÄISCHE PATENTSCHRIFT**

(45) Veröffentlichungstag der Patentschrift: 08.08.90

(51) Int. Cl.5: **C 22 B 7/02, C 22 B 1/248**

(21) Anmeldenummer: **86104333.9**

(22) Anmeldetag: **28.03.86**

(54) **Verfahren zur Aufbereitung von eisenhaltigen, feinkörnigen Abgängen mit Legierungselementen, z.B. Chrom in sechswertiger Oxydationsstufe, insbesondere im Filterstaub und/oder im Filterschlamm, der Stahl-, insbesondere der Elektrostahlherstellung.**

(30) Priorität: 30.03.85 DE 3511800
17.04.85 DE 3513733

(43) Veröffentlichungstag der Anmeldung:
22.10.86 Patentblatt 86/43

(45) Bekanntmachung des Hinweises auf die
Patenterteilung:
08.08.90 Patentblatt 90/32

(84) Benannte Vertragsstaaten:
AT BE CH DE FR GB IT LI LU NL SE

(56) Entgegenhaltungen:
DE-A-2 531 457
FR-A-2 081 160
FR-A-2 255 384
US-A-1 517 055
US-A-3 107 166
US-A-3 316 083
US-A-3 824 091
US-A-3 870 507
US-A-3 898 076
US-A-4 336 218

(73) Patentinhaber: Fritsch, Georg, Dr.
Kettelerstrasse 16
D-4620 Castrop-Rauxel (DE)

(72) Erfinder: Fritsch, Georg, Dr.
Kettelerstrasse 16
D-4620 Castrop-Rauxel (DE)

(74) Vertreter: Herrmann-Trentepohl, Werner, Dipl.-
Ing. et al
Schaeferstrasse 18
D-4690 Herne 1 (DE)

## Beschreibung

Die Erfindung betrifft ein Verfahren zur Aufbereitung von eisenhaltigen, feinkörnigen Abgängen mit Legierungselementen, z.B. Chrom, auch in sechswertiger Oxydationsstufe, insbesondere im Filterstaub und/oder im Filterschlamm, der Stahl-, insbesondere der Elektroherstellung.

Diese feinkörnigen Abgänge fallen insbesondere in der Stahlindustrie an und enthalten in mehr oder weniger großem Umfang Legierungselemente, insbesondere Chrom, auch in sechswertiger Oxydationsstufe. Insbesondere bei der Elektrostahlerzeugung fallen einerseits die sogenannten UHP-Stäube (Ultra-High-Power-Stäube) an, welche trocken in Schlauchfiltern festgehalten werden, die zur Entstaubung der Atmosphäre eingesetzt sind. Andererseits fallen bei der Stahlaufbereitung nach dem AOD-Verfahren (Argon-Oxygen-Decarburation) die feinkörnigen Abgänge als Naßschlamm an, dessen Trockenmasse etwa die Hälfte bis Zweidrittel der Gesamtmasse ausmacht. Die hierbei gesammelten Abgangsmengen müssen entsorgt werden. Die Entsorgung ist jedoch schwierig, weil z.B. freies, sechswertiges Chrom zu den Substanzen gehört, welche Krebs erregen bzw. in Verdacht karzinogener Wirkungen stehen. Solche und ähnliche Stäube bzw. Schlämme stellen deswegen kein ohne weiteres deponiefähiges Produkt dar, weil sich das in ihm enthaltene, freie sechswertige Chrom im sogenannten Eluat einer Deponie wiederfinden würde. Andererseits ist Chrom, aber auch alle anderen metallischen Komponenten, die bei der Stahl—einschließlich Edelstahlerzegung—eine Rolle als Legierungselemente spielen, viel zu wertvoll, als daß sie, wenn auch in oxidischer Form, lediglich deponiert werden.

In einem Verfahren gemäß US—A—3 898 076 werden feinverteilte Partikel, beispielsweise aus Ferrolegierungen, Chrom, etc., mit Hilfe von organischen Lösungen von Wachsen und Harzen gebunden. Danach werden diese Mischungen brikettiert und bei erhöhter Temperatur gehärtet.

Ferner ist vorgeschlagen worden, z.B. durch Zusatz von ölhaltigen Hydroxidschlämmen und durch Zusatz eines hydraulischen Bindemittels, z.B. Zement, ein deponiefähiges Erzeugnis herzustellen, bei dem das schädliche sechswertige Chrom in ungefährliches dreiwertiges Chrom ungewandelt wird. Dieses Erzeugnis kann unbedenklich auf einer Deponie gelagert werden. Die Bestandteile des betreffenden Abganges werden derart dauerhaft miteinander verbunden, daß sie nicht mehr in das Eluat der Deponie übertreten können. Der Nachteil bei diesem Verfahren ist jedoch, daß die in den Abgängen enthaltenen wertvollen Bestandteile für immer verloren sind. So ist insbesondere das im Abgang enthaltene Chrom ein wichtiger und wertvoller Bestandteil hochwertiger Stahllegierungen.

Der Erfindung liegt daher die Aufgabe zugrunde, ein Verfahren der eingangs genannten Art so zu führen, daß insbesondere das in den Abgängen enthaltene Chrom und auch die anderen Legierungselemente einer Wiederverwendung zugeführt werden können.

Diese Aufgabe löst die Erfindung dadurch, daß der feinkörnige Abgang mit einer wäßrigen Polymerlösung versetzt und das so gewonnene Gemisch zu Formlingen oder lediglich zu Haufwerk verarbeitet wird und die Formlinge oder das Haufwerk an der Luft getrocknet werden. Bevorzugte Ausführungsförmen ergeben sich aus den abhängigen Ansprüchen 2—8.

Durch den Zusatz der wäßrigen Polymerlösung können Formlinge sowohl wie Haufwerk hergestellt werden, die bereits nach einem Tag der Trocknung ohne besondere Wärmezufuhr eine derartige Festigkeit aufweisen, daß sie bei Einbringen in die Schmelzpfannen nicht gleich wieder zu Pulver zerfallen. Dieses Pulver würde bei den in den Pfannen herrschenden Temperaturen augenblicklich wieder als Staub in der Entstaubungsanlage erscheinen, was unerwünscht ist. Die Polymerlösung wirkt sich nicht nachteilig auf die Güte des herzustellenden Stahles aus, da die gelöste Kohlenstoff-Wasserstoff-Sauerstoffverbindung bei der Stahlerzeugung eher erwünschte gute Reduktionseigenschaften hat, welche unter Prozeßedingungen förderlich sind. Die Formlinge bzw. das Haufwerk erreichen mit Hilfe des oben genannten Verfahrens eine Druckfestigkeit von bis zu 430 N/cm$^2$, eine Festigkeit, die für den erfindungsgemäßen Einsatz völlig ausreichend ist. Diese Festigkeit wird z.B. nach fünfzehn Tagen Trocknungszeit erreicht, während nach zwei Tagen der Trocknung eine Festigkeit von 195 N/cm$^2$ erreicht wird, die ebenfalls schon für den erfindungsgemäßen Einsatz ausreicht.

Nach einer Trocknungszeit von zwei Tagen erreicht der Anteil der Restfeuchtigkeit einen Wert von kleiner als 10%. Bei einer derartig geringen Restfeuchtigkeit ist die Gefahr eines explosionsartigen Verdampfens von im Formling oder Haufwerk befindlichen Wasser ausgeschlossen.

Die Vorteile der nach dem obigen Verfahren hergestellten Formlinge oder des Haufwerks bestehen somit darin, daß einerseits das schädliche sechswertige Chrom durch die Wiederverwendung unschädlich für das Grund- oder Sickerwasser gemacht wird und daß hierdurch verhindert wird, daß wertvolle Rohstoffe durch teures Deponieren unwiederbringlich verlorengehen. Das erfindungsgemäße Verfahren entpricht dem Gedanken einer Wiedereinführung (Recycling) von Abfällen mit wertvollen Anteilen an Legierungselementen in den technischen Herstellungsprozeß und erscheint unter aktuellen Umweltschutzgesichtspunkten sowohl ökologisch wie ökonomisch sinnvoll.

Vorteilhafterweise wird das Verfahren so geführt, daß zuerst der nasse Filterschlamm mit dem Polymer versetzt wird, so daß im Filterschlamm eine beispielsweise ca. 0,4 %ige Polymerlösung entsteht. Erst dann wird der Filterstaub zugesetzt, wobei die Gesamtmenge an polymerem Kleber auf etwa 0,2% zurückgeht.

Obwohl bei diesem Verfahren sowohl der Schlamm allein als auch der Staub allein mit der wäßrigen Polymerlösung versehen werden kann, wobei bei alleiniger Verwendung von Staub eine für das Gemisch notwendige Wassermenge zugesetzt werden muß, werden vorzugsweise etwa gleiche Gewichtsanteile an Staub und Schlamm verwendet.

Während bei der Verarbeitung von ausschließlich UHP-oder anderem Staub entweder eine Polymerlösung von geringerem Gehalt, d.h. mit höherem Wasseranteil zum Anteigen verwendet werden kann oder die gleiche Polymerlösung wie für das Gemisch UHP-Staub und z.B. AOD-Schlamm und eine zusätzliche Menge Wasser, um die geeignete Konsistenz zu erreichen, muß im Falle der ausschließlichen Verarbeitung von z.B. AOD-Schlamm dieser zum weiteren Abtrocknen auf ca. 75 bis 85% Feststoffanteil in dünner Schicht zum Abtrocknen ausgebreitet werden, bevor eine etwas konzentriertere wäßrige Polymerlösung von z.B. nicht 4% Gehalt, wie beim Gemisch 1/1 üblich, sondern von 8% bis 16% Gehalt zugesetzt wird. Der Vorgang des notwendigen Abtrocknens kann aber auch dadurch erreicht werden, daß der z.B. 60 bis 66% Feststoff enthaltende, durch Vakuumentwässerung oder auch auf andere Weise erhaltene Dickschlamm nach Vermischen mit der Polymerlösung erforderlichenfalls bis zu fünf Tagen der Abtrocknung an der Luft unterworfen wird. Die Schichtdicke sollte dabei 50 bis 60 mm nicht wesentlich überschreiten. Dabei wirkt ein saugfähiger Untergrund, also z.B. der gewachsene Erdboden auf die Abtrockenzeit verkürzend.

Bei alleiniger Verwendung von AOD-Schlamm ist beim Trockungsvorgang die stärkste Schrumpfung, bei alleiniger Verwendung von UHP-Staub die geringste Schrumpfung festzustellen.

Durch den Zusatz von aus der Schlackenaufbereitung gewonnenem Eisen 1—10 wird die Gesamtmischung schwerer, so daß das Haufwerk bzw. die Formlinge beim Einbringen in die Stahlschmelze die auf der Stahlschmelze vorhandene Schlackenschicht leichter durchschlagen können. Der Begriff Eisen 1—10 gibt nach Sieblinie 0—10 sortierte Eisenteile unterschiedlicher, sich beim Sieben ergebender Größe an.

Vorteilhafter Weise wird dem Gemisch eine gewichtsmäßig gleiche Eisenmenge von Eisen 1—10 zugesetzt.

Im folgenden wird das erfindungsgemäße Verfahren anhand von Beispielen näher erläutert:

Beispiel 1:
(V6084)

500 kg AOD-Schlamm mit 48 bis 66% Feststoffanteil werden mit 57 l einer 4%igen wäßrigen Lösung von "Polyviol G18/140" der Firma Wacker GmbH, München in einem 750 l Intensivmischer z.B. der Firma Teka, Edenkoben, ca. 2 bis 3 min bis zur völligen Homogenität gemischt. Alsdann wird, ohne den Mischvorgang zu unterbrechen, 500 kg UHP-Staub in trockener Form zugegeben und noch ca. 2 bis 3 min weitergemischt. Alsdann wird das Mischgut in die Mulde eines Frontladers entleert, an geeigneter Stelle in einer überdachten Halle als ca. 50 bis 60 mm dicke Schicht zum Trocknen ausgebracht bzw. ausgestrichen. Nach zwei Tagen ist die Restfeuchte auf Werte unter 10%, meist um 6 bis 7% zurückgegangen. Die Druckfestigkeit beträgt nunmehr 65 bis 140 N/cm². Nach vier Tagen werden 195 N/cm² Druckfestigkeit erreicht. Anschließend kann das steinharte Mischgut nach Aufbrechen direkt chargiert oder als Haufwerk in einer Box gestapelt werden.

Beispiel 2:
(V6082)

1000 kg UHP-Staub werden mit 103 l einer 4%igen Polymerlösung, wie in Beispiel 1 beschrieben, versetzt und unter ständigem Weitermischen weitere 187 l Wasser zugegeben. Es steht am Ende einer Gesamtmischzeit von höchstens 3 bis 5 min eine dickpastöse dunkelbraune Masse zur Ausbringung, wie in Beispiel 1 beschrieben, zur Verfügung. Nach drei Tagen beträgt die Restfeuchte 9,3%. Die Druckfestigkeit nach drei Tagen liegt bei 64 bis 120 N/cm². Nach fünfzehn Tagen werden 170 N/cm² erreicht.

Beispiel 3:
(V6088)

1250 kg z.B. AOD-Schlamm mit einem Feststoffanteil von ca. 48 bis 66% werden mit 17,3 l einer 16%igen Polymerlösung, wie in Beispiel 1 beschrieben, 3 min intensiv vermischt. Es entsteht eine dickpastöse, dunkelbraune Masse, die wie unter Beispiel 1 beschrieben, zum Trocknen an der Luft ausgebracht werden kann. Die Druckfestigkeit liegt nach zwei Tagen bei 65 N/cm² und nach drei Tagen bei 90 N/cm². Nach fünf Tagen erreicht sie ca. 120 N/cm². Die Restfeuchte liegt nach 4 Tagen bei 6,6%.

Beispiel 4:
(V6080)

1000 kg an der Luft getrockneter AOD-Schlamm werden mit 106 l einer 4%igen Polymerlösung (wie in Beispiel 1 beschrieben) und 145 l Wasser 2 bis 3 min intensiv im Zwangsmischer gemischt. Es entsteht eine krümelig trockene Masse, die nach sechsunddreißig Stunden bereits eine Druckfestigkeit von 80 N/cm² und nach achtzehn Tagen eine solche von 430 N/cm² aufweist. Die Restfeuchte nach zwei Tagen liegt bei 9,4%, nach drei Tagen bei 4,6%.

Beispiel 5:
(V6083)

1000 kg UHP-Staub werden in den Mischer vorgelegt und 57 l 4%ige Polymerlösung (wie Beispiel 1) sowie 172 l Wasser zudosiert. Nach einer Mischzeit von 2 bis 3 min im Intensivmischer entsteht eine krümelige, dunkelbraune Masse, die nach zwei Tagen eine Restfeuchte von 9,7% und nach drei Tagen eine Druckfestigkeit von 110 N/cm² aufweist. Nach fünfzehn Tagen liegt die Festigkeit bei 190 N/cm² und die Restfeuchte bei 4,3%.

**Beispiel 6:**

650 kg AOD-Schlamm mit einem Feststoffanteil von 66% werden mit 33,4 kg einer 4%igen Lösung aus Vinnapas A 50 zwei bis drei min intensiv im Zwangsmischer gemischt. Die entstandene Masse wird ausgebracht oder in Formen gefüllt. Nach vier Tagen erreicht die Masse eine Druckfestigkeit von 50 N/cm². Die Restfeuchtigkeit beträgt bei dem Haufwerk nach drei Tagen 9,3% und bei den Formlingen nach fünf Tagen <10%.

**Patentansprüche**

1. Verfahren zur Aufbereitung von eisenhaltigen, feinkörnigen Abgängen mit Legierungselementen, z.B. Chrom, auch in sechswertiger Oxydationsstufe, insbesondere im Filterstaub und/oder im Filterschlamm, der Stahl-, insbesondere der Elektrostahlherstellung, dadurch gekennzeichnet, daß der feinkörnige Abgang mit einer wäßrigen Polymerlösung versetzt und das so gewonnene Gemisch zu Formlingen oder Haufwerk an der Luft getrocknet wird.

2. Verfahren nach Anspruch 1, dadurch gekennzeichnet, daß der Anteil von Filterschlamm 99,7 bis 0% und der Anteil von Filterstaub 0 bis 99,8% im Gemisch beträgt.

3. Verfahren nach den Ansprüchen 1 und 2, dadurch gekennzeichnet, daß zuerst der Filterschlamm mit dem Polymer versetzt und dann der Filterstaub untergemischt wird.

4. Verfahren nach Anspruch 1, dadurch gekennzeichnet, daß etwa gleiche Gewichtsanteile an Staub und Schlamm verwendet werden.

5. Verfahren nach Anspruch 2, dadurch gekennzeichnet, daß bei ausschließlicher Verwendung von Staub die erforderliche Menge an Polymerlösung und Wasser zum Ansatz beim Mischvorgang zugesetzt wird.

6. Verfahren nach den Ansprüchen 1 bis 5, dadurch gekennzeichnet, daß die Polymere aus Polyvinylacetat oder Polyvinylalkohol bestehen.

7. Verfahren nach einem oder mehreren der Ansprüche 1 bis 6, dadurch gekennzeichnet, daß dem Gemisch Eisen 1—10 aus der Schlackenaufbereitung zugesetzt wird.

8. Verfahren nach Anspruch 7, dadurch gekennzeichnet, daß Gemisch und Eisen 1—10 im Verhältnis 1/1 stehen.

**Revendications**

1. Procédé de recyclage de déchets ferreux fins contenant des éléments d'alliage comme le chrome, également sous sa forme oxydée hexavalente, en particulier de poussière et/ou de boue de filtre venant d'aciéries, plus particulièrement d'aciéries électriques, caractérisé en ce que les déchets fins sont transformés par une solution aqueuse d'un polymère et le mélange ainsi obtenu est séché à l'air pour obtenir des briquettes ou des déblais.

2. Procédé selon la revendication 1, caractérisé en ce que la fraction de boue de filtre dans le mélange est comprise entre 99,7 et 0%, et la fraction de poussière de filtre entre 0 et 99,8%.

3. Procédé selon les revendications 1 et 2, caractérisé en ce qu'on commence par traiter la boue de filtre par le polymère et on la mélange ensuite à la poussière de filtre.

4. Procédé selon la revendication 1, caractérisé en ce qu'on utilise des fractions sensiblement égales de poussière et de boue.

5. Procédé selon la revendication 2, caractérisé en ce que pour une utilisation exclusive de poussière, la quantité de solution de polymère et d'eau qui est nécessaire est ajoutée au début de l'opération de mélange.

6. Procédé selon les revendications 1 à 5, caractérisé en ce que les polymères sont constitués par de l'acétate de polyvinyle ou par de l'alcool polyvinylique.

7. Procédé selon une ou plusieurs des revendications 1 à 6, caractérisé en ce que l'on ajoute au mélange du fer 1—10 provenant du traitement des scories.

8. Procédé selon la revendication 7, caractérisé en ce que la proportion entre le mélange et le fer 1—10 est de 1/1.

**Claims**

1. Process for preparing fine ferrous discharge matter with alloying elements, e.g. chromium, also in its sixth oxidation stage, particularly in filter dust and/or in filter sludge, from the manufacture of steel particularly electrosteel, characterised in that the fine discharge matter is mixed with an aqueous polymer solution and the mixture thus obtained is dried in air to form briquettes or debris.

2. Process according to claim 1, characterised in that the proportion of filter sludge in the mixture amounts to 99.7 to 0% and the proportion of filter dust amounts to 0 to 99.8%.

3. Process according to claims 1 and 2, characterised in that first the filter sludge is mixed with the polymer and then the filter dust is mixed in.

4. Process according to claim 1, characterised in that approximately equal proportions by weight of dust and sludge are used.

5. Process according to claim 1, characterised in that, when exclusively using dust, the necessary quantity of polymer solution and water is added to the mixture during the mixing procedure.

6. Process according to claims 1 to 5, characterised in that the polymers consist of polyvinyl acetate or polyvinyl alcohol.

7. Process according to one or more of claims 1 to 6, characterised in that iron 1—10 from the slag preparation is added to the mixture.

8. Process according to claim 7, characterised in that mixture and iron 1—10 are present in the ratio 1/1.